# EUROPEAN PATENT SPECIFICATION

(11) **EP 2 692 562 B1**
(45) Date of publication and mention of the grant of the patent: **08.07.2015**
(21) Application number: 13179324.2
(22) Date of filing: 05.08.2013
(51) Int. Cl.: B60J 7/16

(54) **Roof hatch for vehicles**
Dachluke für Fahrzeuge
Trappe de toit pour véhicules

(30) Priority: 03.08.2012 IT BO20120431; 03.08.2012 IT BO20120432
(43) Date of publication of application: 05.02.2014
(73) Proprietor: Scalabros S.r.l., Valsamoggia (IT)
(72) Inventor: Scalabrini, Benedetto, 41124 Modena (IT); Scalabrini, Giovanni, 40050 Castello di Serravalle (IT)
(74) Representative: Boggio, Luigi

(56) References cited:
- DE-U1- 20 100 220
- US-A- 4 519 645
- US-B1- 6 347 484

## Description

The present invention relates to a roof hatch for vehicles, and in particular to a roof hatch comprising a lid quick release system.

The present invention is advantageously but not exclusively applied to passenger buses, to which explicit reference will be made in the description that follows without for this loosing in generality.

The most modern buses normally have fixed, sealed side windows, and for this reason the inside of the vehicle is fully air conditioned. In order to allow a fast exchange of air, buses are normally provided with at least one hatch arranged in the roof and which can be opened either manually or electrically. The hatch comprises a frame attachable to the perimeter of an opening in the frame and an opening and closing system which connects the lid to the frame in a mobile manner to displace, either manually or by means of electric actuation, the lid between a closing position of the hatch and an opening position of the hatch. The opening and closing system in all cases maintains the lid restrained to the frame in both the opening and closing positions of the hatch. The lid may be made of various materials, e.g. materials which are transparent to light or not. In particular, the lid may consist, for example, of a glass sheet or a metal sheet which may be lined with soft material on the inside or not.

In case of emergency, it must be possible either to break or to release the lid from the frame in simple, rapid manner to allow passengers to exit or rescue personnel to enter through the hatch.

The most simple known solution to the problem of guaranteeing rapid, easy removal of the lid is to have a lid made of breakable material, typically a tempered glass sheet, and to provide the hatch with a mallet capable of shattering the lid when it is struck a few times. It is apparent that a solution of this kind does not allow to use whatever material for the lid, and furthermore forces to replace the lid whenever it is shattered.

Another known solution to the aforesaid problem is to provide the hatch with a quick release system of the lid. In particular, a quick release system is known which is arranged inside the lid and which comprises one or two handles, which are fitted on the inner face of the lid and which work, when appropriately actuated, by releasing the lid from the opening and closing system.

Such a solution allows to save the lid because the latter is not damaged during release. However, such a solution does not allow maximum freedom of choice of materials with which to make the lid. Indeed, a completely transparent lid cannot be made because the quick release mechanism must be concealed inside the lid.

The German utility model DE 20100220 U1 discloses a openable roof structure for a vehicle, such as for example a bus, comprising a mobile closing organ to close a roof opening and a moving mechanism to move the closing organ. The moving mechanism is completely housed in a central support, which extends in the longitudinal direction of the relative vehicle substantially at the centre of the roof opening, is connected to two edges of the roof opening arranged one opposite to the other, and is suited to be completely removable from the edges of the roof opening.

It is the object of the present invention to make a roof hatch which is free from the above-described drawbacks and which is, at the same time, easy and cost-effective to make.

In accordance with the present invention a roof hatch for vehicles is made as defined in the appended claims.

The present invention will now be described with reference to the accompanying drawings, which illustrate a non-limitative embodiment thereof, in which:
- figure 1 shows a perspective view of a roof hatch for vehicles according to the present invention with the lid in opening position of the hatch;
- figures 2 and 3 are side views of the hatch in figure 1 which show details of the opening and closing system of the hatch with the lid in the opening position and in the closing position, respectively;
- figure 4 is a plan view of the quick release system of the hatch lid in figure 1;
- figure 5 is a perspective view of part of the opening and closing system in figure 2 and part of the lid quick release system in figure 4;
- figure 6 is a cross section view showing details of the end of a crank arm of the opening and closing system in figure 2; and
- figure 7 is a section view taken along a plane parallel to the plane crossing the symmetry axis of the hatch showing details of the handles of the quick release system in figure 5.

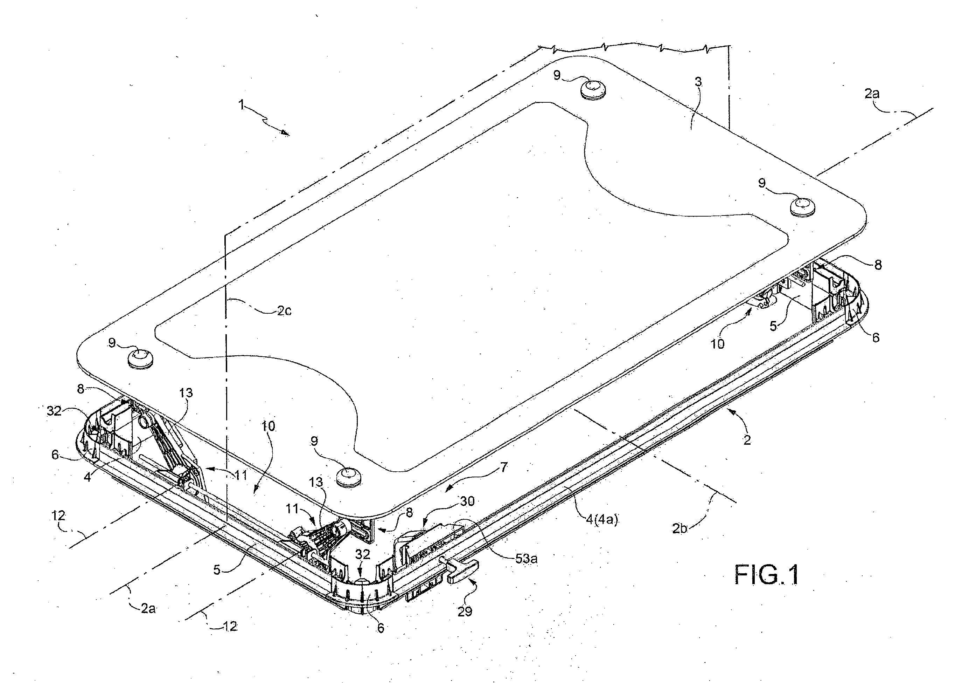

In figure 1, reference numeral 1 generically indicates a roof hatch for vehicles as a whole. The hatch 1 comprises a frame 2, which is rectangle-shaped with round corners fixable to the perimeter of a corresponding opening in the roof of a vehicle (not shown), and a lid 3 adapted to close the opening defined by the frame 2, and consisting in particular of a rectangle-shaped sheet of glass with rounded corners. In figure 1, reference numerals 2a and 2b indicate the longitudinal and transversal symmetry axes of the frame 2, respectively. The axes 2a and 2b are orthogonal to each other. The frame 2 comprises two longer sides 4 parallel to axis 2a, two shorter sides 5 parallel to axis 2b and four curved angular elements 6 connecting the longer sides 4 and the shorter sides 5 to one another.

The hatch 1 further comprises an opening and closing system 7, which connects in a mobile manner the lid 3 to the frame 2 and can be manually actuated to move the lid 3 between a closing position of the hatch 1 and an opening position of the hatch 1. Figure 1 shows the lid 3 in the opening position. Normally, a rubber seal (not shown) is arranged along the upper edge of the frame 2 to guarantee the hermetic tightness of the hatch 1 when the lid 3 is in the closing position.

The opening and closing system 7 comprises four brackets 8 fixed with the fixing portions thereof to the four corners of the lid 3 by means of respective bolts (not shown), the heads of which project from the outer face of the lid and which are covered by respective caps 9, and two identical opening and closing devices 10, each of which is fitted on a respective smaller side 5 of the frame 2 and is connected in a mobile manner to a respective pair of brackets 8 fixed to the corners of a respective short side of the lid 3. The two opening and closing devices 10 work independently from one another. Only one of the opening and closing devices 10 can be seen between the lid 3 and the frame 2 in figure 1. Each opening and closing device 10 comprises a respective pair of cranks 11, each of which turns with respect to a respective axis 12 and comprises a first arm 13 coupled in a mobile manner to a respective bracket 8. The two cranks 11 are arranged symmetrically with respect to a symmetry plane 2c of the hatch 1 through axis 2a and perpendicular to axis 2b, and in particular to rotation axes 12 parallel to each other and laying on a plane perpendicular to plane 2c.

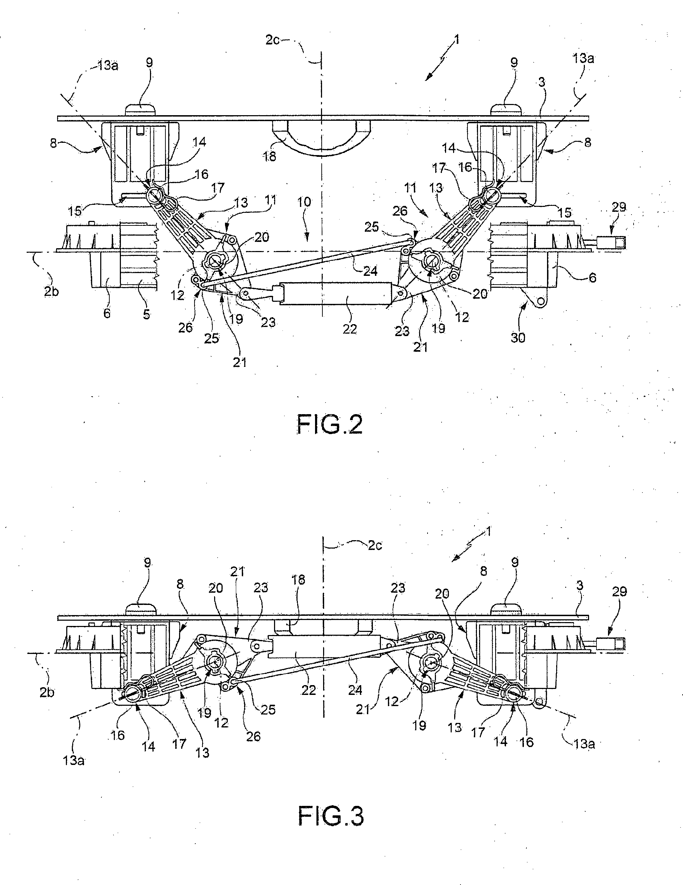

Figures 2 and 3 both show a side view parallel to axis 2b of the hatch 1, in which a smaller side 5 of the frame 2 was partially removed to show the opening and closing device 10 in greater detail. Figure 2 shows the hatch 1 with the lid 3 in the opening position and figure 3 shows the hatch 1 with the lid 3 in the closing position.

With reference to figures 2 and 3, each arm 13 extends along a respective axis 13a passing through axis 12 and comprises a cylindrical seat 14 at the end thereof having a through hole (not shown in figures 2 and 3) according to an axis parallel to axis 12, and each bracket 8 has an end portion which projects perpendicularly from the inner face of the lid 3, a slit 15 parallel to the short side of the lid 3. The mobile coupling between the arm 13 and the respective bracket 8 is made by means of a respective pin 16, which coaxially crosses the cylindrical seat 14 to engage without interference the slit 15, and a respective R-clip 17, otherwise known as spring cotter pin or R-pin, inserted transversally in the cylindrical seat 14 to withhold the pin 16 in the cylindrical seat 14, so that the pin 16 can slide along the slit 15 and turn about the axis therefore following the movements of the arm 13.

The hatch 1 comprises two handles 18 fitted on the inner face of the lid 3 to be able to manually pull the lid towards the frame 2 or manually push the lid 3 away from the frame 2 so as to actuate the opening and closing devices 10, as will be explained in greater detail below. The two handles 18 are aligned along axis 2a, and thus only one handle 18 is shown in figure 2.

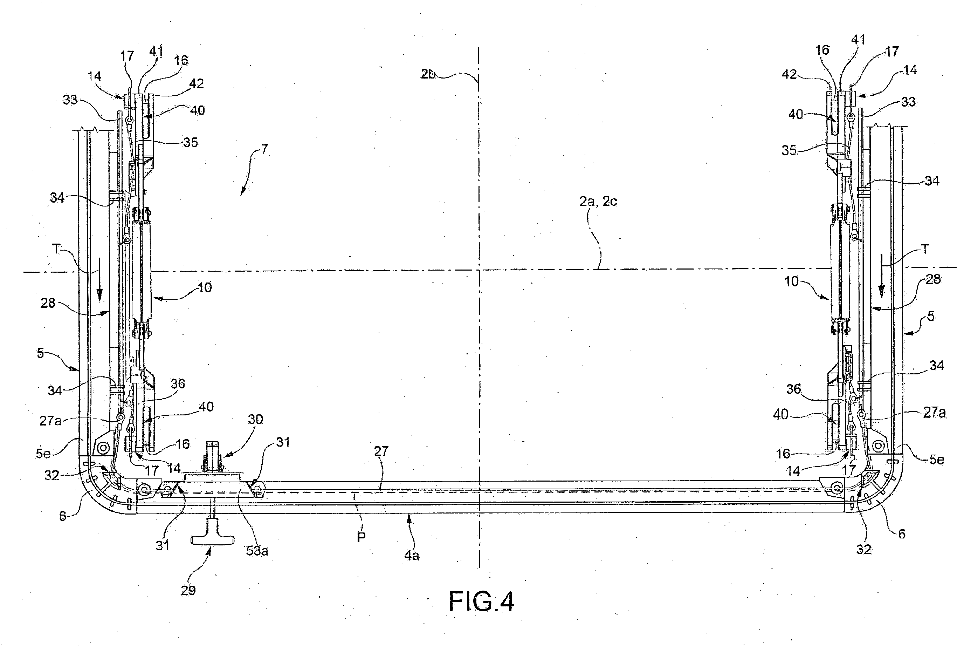

Each crank 11 comprises a main hole 19, which is coaxial to axis 12 and is engaged without interference by a respective pin 20 fixed to the smaller side 5 of the frame 2 and projecting into the perimeter of the frame 2 to allow the rotation of the crank 11, and a second arm 21, which extends along axis 13a on the opposite side, with respect to axis 12, of the arm 13. The opening and closing device 10 comprises a spring piston 22 having the ends thereof hinged to the ends 23 of the two arms 21 so as to remain partially compressed and hold the two ends 23 of the arms 21 apart, and thus to move the cylindrical seats 14 of the arms 13 close to each other within the limits of the maximum excursion of the pins 16 along the slits 15. The thrust of the spring piston 22 holds the lid 3 raised, i.e. in the opening position (figure 3), or lowered against the frame 2, i.e. in the closing position (figure 4). In both opening and closing positions, the axes 13a of each pair of cranks 11 are transversal to each other.

In use, the passage from the opening position to the closing position occurs by manually pulling the lid 3 towards the frame 2 by means of the handles 18. This manual actions makes the two cranks 11 turn about the axes 12 in opposite senses so as to move the ends 23 close to each other, and thus increase the compression of the spring piston 22, and move the cylindrical seats 14 away from each other. When the spring piston 22 reaches and exceeds a maximum compression position, in which the ends 23 are at a reciprocally minimum distance, the spring piston 22 tends to move the ends 23 away again maintaining the same senses of rotation of the handles 11, and thus takes and maintains the lid 3 in the closing position. The opposite transition, i.e. from the closing position to the opening position, occurs by manually pushing the lid 3 to move it away from the frame 2 so as to actuate the opening and closing devices 10 in reverse manner to that described above.

In order to synchronize the rotations of the two cranks 11, each opening and closing device 10 comprises a synchronization bar 24 which has two ends 25 each hinged to a respective crank 11. In particular, each crank 11 has at a given radial distance from axis 12 a respective hole 26 and each end 25 of the bar 24 is L-folded to engage the hole 26 of a respective crank 11 without interference.

With reference to figure 4, which shows a plan view of the opening and closing system 7 free from the brackets 8, the hatch 1 is provided with a quick release system of the lid, comprising a main control cable 27, which is normally stretched out along a path P extending between two end portions 5e of the two smaller sides 5, the two release assemblies 28 being essentially identical, each of which is associated to a respective opening and closing device 10, is connected to a respective end of the main cable 27 and is adapted to extract the R-clips 17 from the respective cylindrical seats 14 by effect of a traction transmitted from the main cable 27, and two handles 29 and 30 coupled to the main cable 27 to apply traction to the main cable 27 itself. The main cable 27 is a steel braid cable.

In particular, the path P passes through two angular members 6 of the frame 2 connected to the two end portions 5e of the smaller sides 5 and along the entire longer side of the frame 2, shown by 4a, including such angular members 6. Each handle 29, 30 is fitted on the longer side 4a of the frame to be mobile between a rest position, in which the main cable 27 is completely stretched along the path P, and an operating position, in which a non-end section of the main cable 27 is extracted from the path P so that the ends of the main cable 27 retract from the ends of the path P, thus transmitting traction to the two release assemblies 28. In this document, the expression "non-end section of a cable" means a section of the cable which does not comprise either end of the cable.

The handle 29 is an external handle, i.e. fitted on the longer side 4a so as to project outwards from the framework defined by the frame 2. The handle 30 is an inner handle, i.e. fitted on the same longer side 4a as the outer handle 29 but so as to project inside the framework defined by the frame 2. The two handles 29 and 30, which are also shown in figures 1 and 2, are fitted close to a shorter side 5 of the frame 2.

The path P crosses two slots 31 arranged along the frame 2 on the sides of the handles 29 and 30 and two loop 32 obtained on the two angular members 6 which connect the longer side 4a with the smaller sides 5. The slots 31 restrain the sliding of the main cable 27 along the path P whilst a handle 29, 30 extracts a section of main cable 27 from the path P. Thus, the releasing of the main cable 27 from the path P occurs on a path section comprised between the slots 31. The loops 32 are visible also in figure 1. For reasons of modularity, the angular members 6 are equal to one another, and thus the loops 32 are present also in the angular elements which are not crossed by the path P (figure 1).

Each release assembly 28 comprises a rod 33 fitted on a respective smaller side 5 of the frame 2 by means of sliding supports 34 so that the rod 33 can move axially and parallel to axis 2b, and a pair of secondary control cables 35 and 36 to each connect a respective R-clip 17 to the rod 33. Each end of the main cable 27 is connected to an end of a respective rod 33. One of the rods 33 and the respective sliding supports 34 are also visible in figure 1. The extraction of a section of main cable 27 from the path P causes a sliding of the two rods 33 according to a same direction T oriented towards the main side 4a. The main cable 27 and each secondary cable 35, 36 have respective ends provided with respective eyelets for connecting to the rods 33 and to the R-clips 17. The secondary cables 35 and 36 are also steel braid cables.

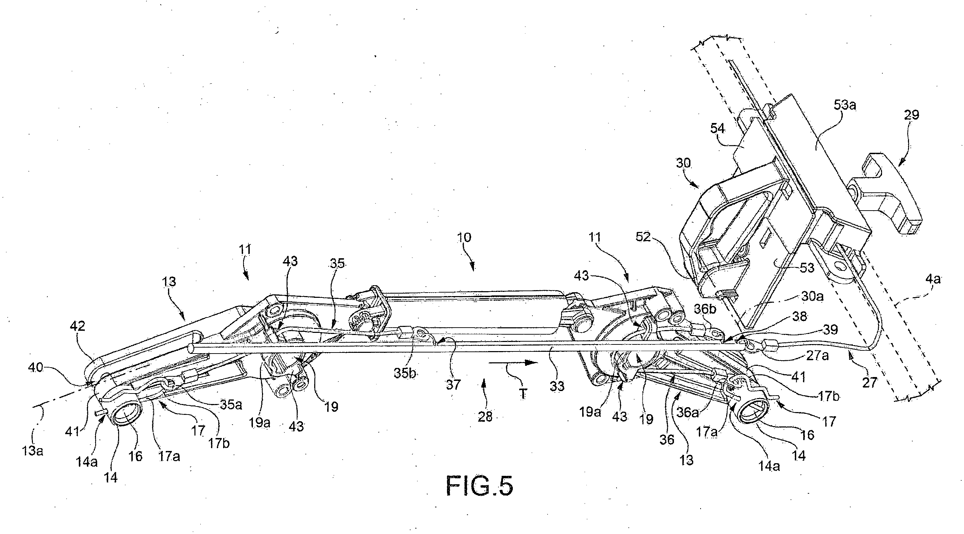

With reference also to figure 5, which shows a perspective view of the opening and closing device 10 and the corresponding release assembly 28 which are closer to the handles 29 and 30, the secondary cable 35 has a first eyelet 35a coupled to the R-clip 17 further from the longer side 4a, and a second eyelet 35b restrained by means of a ring to a hole 37 made in a central section of the rod 33. Another secondary cable 36 has a first eyelet 36a coupled to the R-clip 17 closest to the longer side 4a and a second eyelet 36b restrained by means of a ring to a hole 38 made in an end section of the rod 33 closest to the path P. Each eyelet 27a of the main cable 27 is restrained by means of a ring to a further hole 39 of a respective rod 33. The hole 39 is obtained in the same end section of the rod 33 in which the hole 38 is present.

The arm 13 of each crank 11 has a U-shaped recess 40 open towards the end of the arm 13 itself to accommodate the end portion of the bracket 8 (not shown) which has the slot 15. The recess 40 splits the arm 13 into two jaws 41 and 42 which are parallel to each other. The cylindrical seat 14 which withholds the pin 16 by means of the respective R-clip 17 is obtained in a first jaw 41.

Each R-clip 17 has a rectilinear shank 17a thereof inserted transversally into the respective cylindrical seat 14, through two side holes 14a obtained in positions diametrically opposite to the side wall of the cylindrical seat 14 with the axes parallel to axis 13a of the respective arm 13, and a head 17b inserted in the eyelet 35a, 36a of a respective secondary cable 35, 36.

The two R-clips 17 of each pair of cranks 11 are inserted in respective cylindrical seats 14 in opposite distancing senses from axis 2a or from plane 2c (figure 2). Thus, the two R-clips 17 of each pair of cranks 11 can be inserted in respective cylindrical seats 14 in respective directions of removal which are parallel to the respective axes 13a, but oriented in opposite senses of approach to axis 2a or to plane 2c. In other words, taking as reference direction T, the R-clip 17 further from the longer side 4a can be removed in a direction essentially concordant to direction T and the R-clip 17 closest to the longer side 24 can be removed in a direction essentially concordant to direction T.

Again with reference to figure 5, each crank comprises a pair of loops 43 arranged about the hole 19 in positions diametrically opposite to axis 12. The hole 19 has an edge 19a which projects parallel to axis 12 towards the smaller side 5 on which the opening and closing device 10 is anchored and the loops 43 are arranged along the outer perimeter of the edge 19a.

The secondary cable 35 is essentially stretched between the head 17b of the R-clip 17 further from the longer side 4a and the hole 37 of the rod 33, passing through a single loop 43 of the respective crank 11. Such a loop 43 withholds a terminal section of the cable 35, i.e. a section comprising the eyelet 35a, essentially parallel to the axis of the holes 14a of the respective crank 11. The secondary cable 36, instead, turns about part of the outer perimeter of the edge 19a of other crank 11, passing through the loops 43 so that an end section of the cable 36, i.e. a section comprising the eyelet 36a, is maintained essentially parallel to the axis of the holes 14a of that crank 11.

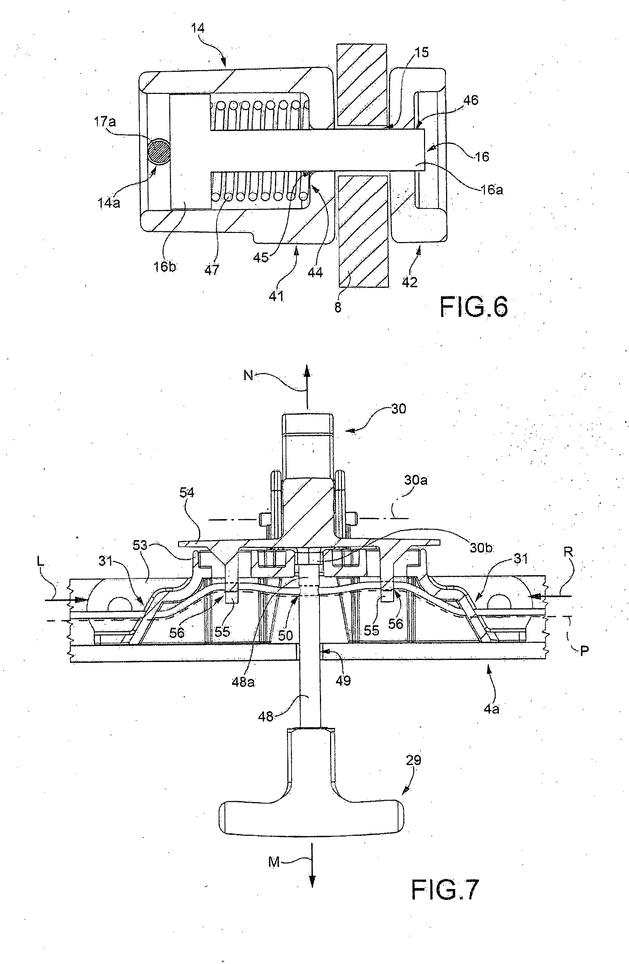

With reference to figure 6, which shows the end of the arm 13 according to a section view taken along a plane crossing the axis of the respective pin 16, the cylindrical seat 14 has a central through hole 45 obtained in the bottom 44 of the cylindrical seat 14 itself and the jaw 42 has a through hole 46 coaxial with and having the same diameter as the hole 45. The shank 16a of the pin 16 engages the holes 45 and 46 and the slot 15 of the bracket 8 arranged between the jaws 41 and 42. The inner diameter of the cylindrical seat 14 is larger than that of the holes 45 and 46 so as to accommodate a pin 16, the diameter of the head 16b of which is larger than the shank 16a. A helicoidal spring 47 is accommodated in the cylindrical seat 14, which is wound about the shank 16a of the pin 16 and withheld normally compressed against the bottom 44 of the head 16b of the pin 16, which head 16b is, in turn, withheld in the cylindrical seat 14 of the shank 17a by the R-clip 17 inserted in the holes 14a of the cylindrical seat 14a. The pressure of the spring 47 allows the immediate ejection of the pin 16 from the cylindrical seat 14 as soon as the R-clip 17 is removed from the holes 14a.

With reference to figure 5 and to figure 7, the latter showing the handles 29 and 30 according to a section view taken along a plane parallel to axes 2a and 2b, the outer handle 29 is T-shaped and the shank 48 is mounted to slide parallel to the axis 2b through an opening 49 in the outer wall of the longer side 4a. The shank 48 comprises an end portion 48a having a hole 50 crossed by the main cable 27. The outer handle 29 is mobile along a rectilinear trajectory between the rest position (shown in figure 7), in which the hole 50 is essentially aligned with the path P, and the operating position (not shown), in which the hole 50 is greatly misaligned from the path P. The expression "greatly misaligned" means a distance of a few centimeters, e.g. from 3 to 5 cm. The outer handle 29 is maintained in the rest position thereof of the main cable 27 stretched along the path P.

The inner handle 30 has a closed shape and comprises a lower portion 52, which is hinged to a support 53 fixed to the longer side 4a of the frame 2 so as to allow the rotation of the inner handle 30 about a hinge axis 30a parallel to axis 2a, and an upper portion 54, which comprises two flaps 55 parallel to axis 2b and having respective holes 56 crossed by the main cable 27. The upper portion 54 is mobile along an arch-shaped trajectory by effect of the rotation about the axis 30a between the rest position (shown in figure 7), in which the upper portion 54 rests on the support 53 and the holes 56 are essentially aligned with the path P, and the operating position, in which the upper portion 54 is away from the support 54 and the holes 56 are greatly misaligned from the path P (not shown). The slots 31 which maintain the main cable 27 along the path P are obtained in the support 53 and outside the flaps 55.

When the handles 29 and 30 are both in rest position, the holes 56 of the inner handle 30 are arranged on opposite sides of the hole 50 of the outer handle 29. Preferably, the holes 56 are essentially aligned with the hole 50. The handles 29 and 30 are coupled, when they are both in rest position, with a section of main cable 27 having a length essentially equal to the distance measured parallel to axis 2a, between the flaps 55, i.e. a distance of a few centimeters, e.g. less than 10 cm. This allows to fit both handles 29 and 30 on the same support 53 and to enclose the coupling area in a single housing closed by a lid 53a (figures 1, 4 and 5) so as to form a single handle assembly which can be easily fit on the frame 2. Furthermore, the inner handle 30 has a seat 30b obtained in the upper portion 54 between the two flaps 55, adapted to be engaged by the end 48a of the shank of the outer handle 29 when the handles 29 and 30 are in the respective rest positions so that the outer handle 29 rests on the inner handle 30 in centered position with respect to the inner handle 30 when the handles 29 and 30 are both in rest position.

The length of the main cable 27 is such that once connected to the two rods 33, it tends to remain extended and thus tends to align the holes 56 of the inner handle 30 with the hole 50 of the outer handle 29. Thus, the tension of the main cable 27 normally maintains the handles 29 and 30 in their respective rest positions.

In use, by pulling the outer handle 29 in direction M away from the axis 2a (figure 7) to take the handle 29 to its working position, or pulling the inner handle 30 in the sense N towards axis 2a to take the handle 30 to the operating position, causes the releasing of a section of the main cable 27 from the path P.

In particular, during the actuation of the outer handle 29, the main cable 27 remains restrained to the hole 50 by effect of the traction of the shank 48 and is removed from the path P in direction M by the movement of the shank 48. The main cable section 27 extracted from the path P pulls, through the two slots 31 and in two opposite directions L and R (figure 7), two sections of main cable 27 having practically the same length equal to approximately half the length of the section extracted from the path P. These two sections slide through the respective holes 56, which remain stationary along the path P because the traction of the main cable 27 in direction M maintains the inner handle 30 in rest position.

During the actuating of the inner handle 30, the flaps 55 remove the main cable 27 from the path P in direction N whilst the main cable 27 remains essentially restrained in the hole 50 by effect of the traction exerted by the flaps 55. Also in this case, the section of main cable 27 which is extracted from the path P pulls the two sections of main cable 27 through the two slots 31.

The pulling of the main cable 27 through the slots 31 causes the retraction of the ends of the main cable 27 from the smaller sides 5, thus making the two rods 33 make respective movements of equal entity in the same direction T (figure 4). The rods 33 in turn pull respective pairs of secondary cables 35 and 36. Each secondary cable 35, sliding in a single loop 43 of the respective crank 11, pulls the respective R-clip 17 in a direction parallel to the axis 13a of such a crank 11 and with sense essentially concordant to direction T, thus removing the R-clip 17 from the respective cylindrical seat 14. Each secondary cable 36, by sliding in the two loops 43 about the hole 19 of the other crank 11, pulls the respective R-clip 17 in a direction essentially parallel to axis 13a of such a crank 11 and with sense essentially opposite to direction T, thus pulling out the R-clip 17 from the respective cylindrical seat 14 (figure 5). Thus, the rods 33 transfer the movement of the main cable 27 to the secondary cables 35 and 36 and, together with the latter, distribute traction that the main cable 27 receives from one of the two handles 29 and 30 to the various R-clips 17.

As soon as the shanks 17a of the R-clips 17 clear the side holes 14a of the respective cylindrical seats 14, the respective pins 16, being no longer withheld, are immediately ejected from the cylindrical seats 14 by virtue of the springs 47 (figure 6), and thus are removed also from the slots 15 of the respective brackets 8. At this point, in absence of pins 16, the brackets 8 are uncoupled from the arms 13 of the respective cranks 11 and thus the lid 3 is completely released from the opening and closing system 7.

It is worth noting that the force and excursion of the traction to be applied to each handle 29, 30 in the respective direction M, N must cause a shift of both rods 33 of entity such to remove all the R-clips 17 from the cylindrical seats 14. Despite the obvious mechanical clearances which may be in the connections between the main cable 27 and the rods 33, between the rods 33 and respective secondary cables 35 and 36, and between the secondary cables 35 and 36 and the respective R-clips 17, the use of relatively short flexible R-clips 17 allows to effectively release the lid 3 by applying a relatively low traction on the handle 29, 30 and with a relatively short excursion, e.g. approximately 5 cm.

According to a further embodiment (not shown) of the present invention, in which the corresponding members are indicated using the same reference numerals as in figures from 1 to 8, each opening and closing device 10 comprises an electric actuator instead of the spring piston 22, comprising a motor arranged with its drive shaft parallel to the axes 12 of the handles 11, and a motion transmission system to couple the motor shaft to each crank 11 to transform an angular displacement of the drive shaft into two angular displacements of the cranks 11 of reciprocally equal entity but opposite sense, so as to allow the displacement of the lid 3 between the opening position and the closing position. In this manner, the opening and closing system 7 can be electrically actuated.

Although the invention' described above makes particular reference to a specific embodiment, it is not limited to such an embodiment, being all variants, changes or simplifications which would be apparent to a person skilled in the art comprised within the scope of protection, such as for example:
- the hatch may have only the outer handle 29 and the slots 31 may be closer to each other;
- the hatch may have only the inner handle 30, so that when the later is actuated the main cable 27 remains essentially restrained to the holes 5 of the slots 55 by effect of the traction of the flaps 55;
- the handles 29 and 30 may be fitted in a central section of the longer side 4a so as to be essentially equally distanced from both smaller sides 5 of the frame 2;

- the opening and closing devices 10 and the corresponding release assemblies 28 may be fitted on the longer sides 4 of the frame 2 and the handles 29 and 30 may be fitted on the shorter side 5 of the frame 2;
- two separate main cables 27 may be present, each of which is connected to a respective release assembly 28 and coupled to a respective handle or group of handles 29, 30;
- split pins other than R-clips may be used;
- the spring piston 22 may be replaced by another spring device;
- the ends of the secondary cables 35 and 36 and of the main cable 27, which are restrained to the rod 33 and free from the respective eyelets 35b, 36b and 27a and from the respective rings, may be each inserted in the respective hole 37, 38, 39 of one of the rods 33 and restrained in such a hole 37, 38, 39 by means of a respective screw terminal incorporated in the end itself instead.

The main advantage of the hatch 1 described above is that of being provided with a quick release system of the lid 3 and, at the same time, of being easily customizable with any type of lid 3, because the opening and closing system 7 and the quick release system are entirely mounted on the frame 2 and thus are not touched by the changes to the lid 3. It is sufficient to disassemble the lid 3 from the brackets 8 and replace it with another lid having only the arrangement of the holes for fixing the brackets 8 in common with the previous lid.

## Claims

1. A roof hatch for vehicles, the roof hatch (1) comprising a frame (2), which has two first sides (5) parallel to one another and a second side (4a) arranged between an end portion (5e) of one of said first sides (5) and an end portion (5e) of the other one of said first sides (5), a lid (3) for closing the opening defined by the frame (2), and an hatch opening and closing system (7) comprising at least two brackets (8), which are fixed to the lid (3) and present respective slits (15), at least two mobile organs (11), each of which is mounted mobile on a respective one of said first sides (5), comprises a respective terminal seat (14) presenting a through hole (44) and is coupled in a mobile manner to a respective bracket (8) by means of a respective coupling pin (16), which engages the terminal seat (14) and the slit (15) of said bracket (8); the roof hatch being **characterized in that** said coupling pin (16) is held in the terminal seat (14) by means of a respective split pin (17) and **in that** it comprises a lid quick release system (27-30) comprising a cable (27), which is free to run along a path (P) extending between said two end portions (5e) of the two first sides (5) along the whole second side (4a) and has each of its end (27a) connected to the split pin (17) of a respective mobile organs (11), and at least one handle (29, 30), which is coupled to the cable (27) and is mounted on the second side (4a) so that to be transversally mobile with respect to the path (P) between a rest position, in which the cable (27) is completely stretched out in the path (P), and an operating position, in which a non-end section of the cable (27) is extracted from the path (P) in such a way as to pull the split pins (17) and remove them from the respective terminal seats (14), thus freeing the respective coupling pins (16).

2. A roof hatch according to claim 1, wherein said at least one handle (29, 30) presents at least one coupling hole (50, 56), which is run through by said cable (27), is aligned with said path (P) when the handle (29, 30) is in said rest position, and is not aligned with the path (P) when the handle (29, 30) is in said operating position.

3. A roof hatch according to claim 2, wherein said at least one handle (29, 30), comprises a first handle (29), which comprises a stem (48) mounted so as to slide through a guide opening (49) obtained in said second side (4a) of the frame (2); said coupling hole (50) of the first handle (29) being obtained in an end portion (48a) of the stem (48).

4. A roof hatch according to claim 3, wherein said first handle (29) is mounted on said second side (4a) of the frame (2) so as to project outwards from the framework defined by the frame (2).

5. A roof hatch according to any of the claims from 1 to 4, wherein said at least one handle (29, 30) comprises a second handle (30), which comprises an upper portion (54) having at least two flaps (55) transverse to said second side (4a), and two coupling holes (56) obtained, each, on a respective flap (55).

6. A roof hatch according to claim 5, wherein said second handle (30) comprises a lower portion (52), which is mounted on said second side (4a) so as to rotate around a hinge axis (30a) parallel to the second side (4a) itself; said upper portion (54) being mobile along an arc trajectory due to the effect of the rotation of the second handle (30) around the hinge axis (30a).

7. A roof hatch according to claims 3 and 5, wherein the coupling hole (50) of the first handle (29) is arranged between the coupling holes (56) of the second handle (30) when the first handle (29) and the second handle (30) are both in the rest position.

8. A roof hatch according to claims 5 and 7, wherein the second handle (30) presents a seat (30b), which is obtained in said upper portion (54) between the two flaps (55) and is suited to be engaged by said end portion (48a) of the stem (48) of the first handle (29) in such a way that the first handle (29) centrally rests against the second handle (30) when the first handle (29) and the second handle (30) are both in the rest position.

9. A roof hatch according to any of the claims from 5 to 8, wherein said second handle (30) is mounted on said second side (4a) of the frame (2) so that to project inwards from the framework defined by the frame (2).

## Patentansprüche

1. Dachluke für ein Fahrzeug, wobei die Dachluke (1) einen Rahmen (2) aufweist, der zwei erste Seiten (5) hat, die zueinander parallel sind, und eine zweite Seite (4a), die zwischen einem Endteil (5e) von einer der ersten Seiten (5) und einem Endteil (5e) der anderen der ersten Seiten (5) angeordnet ist, weiter eine Abdeckung (3) zum Schließen der durch den Rahmen (2) definierten Öffnung und ein Lukenöffnungs- und -schließsystem (7), welches zumindest zwei Bügel (8) aufweist, die an der Abdeckung (3) befestigt sind und jeweilige Schlitze (15) aufweisen, zumindest zwei bewegbare Teile (11), wobei jedes davon bewegbar auf einer jeweiligen einen der ersten Seiten (5) befestigt ist, eine jeweilige Endaufnahme (14) aufweist, die ein Durchgangsloch (44) darstellt, und in bewegbarer Weise mit einem jeweiligen Bügel (8) mittels eines jeweiligen Verbindungsstiftes (16) verbunden ist, der mit der Endaufnahme (14) und dem Schlitz (15) des Bügels (8) in Eingriff steht; wobei die Dachluke **dadurch gekennzeichnet ist, dass** der Verbindungsstift (16) in der Endaufnahme (14) mittels eines jeweiligen Splintes (17) gehalten wird, und dadurch, dass sie ein Abdeckungsschnellfreigabesystem (27-30) aufweist, welches ein Seil (27) aufweist, welches frei entlang eines Pfades (P) laufen kann, der sich zwischen den zwei Endteilen (5e) der zwei ersten Seiten (5) entlang der gesamten zweiten Seite (4a) erstreckt, und dessen jeweiligen Enden (27a) mit dem Splint (17) eines jeweiligen bewegbaren Teils (11) verbunden sind, und mindestens einen Handgriff (29, 30), der mit dem Seil (27) verbunden ist und auf der zweiten Seite (4a) befestigt ist, so dass er bezüglich des Pfades (P) seitlich bewegbar ist, und zwar zwischen einer Ruheposition, in der das Seil (27) vollständig in dem Pfad (P) ausgestreckt ist, und einer Betriebsposition, in der ein Abschnitt nicht am Ende des Seils (27) aus dem Pfad (P) derart herausgezogen ist, dass es an den Splinten (17) zieht und sie aus den jeweiligen Endaufnahmen (14) entfernt, was somit die jeweiligen Verbindungsstifte (16) freigibt.

2. Dachluke nach Anspruch 1, wobei der mindestens eine Handgriff (29, 30) zumindest ein Verbindungsloch (50, 56) aufweist, durch welches das Seil (27) läuft, welches mit dem Pfad (P) ausgerichtet ist, wenn der Handgriff (29, 30) in der Ruheposition ist, und welches mit dem Pfad (P) nicht ausgerichtet ist, wenn der Handgriff (29, 30) in der Betriebsposition ist.

3. Dachluke nach Anspruch 2, wobei der mindestens eine Handgriff (29, 30) einen ersten Handgriff (29) aufweist, der einen Schaft (48) aufweist, der so befestigt ist, dass er durch eine Führungsöffnung (49) gleitet, die in der zweiten Seite (4a) des Rahmens (2) vorgesehen ist; wobei das Verbindungsloch (50) des ersten Handgriffes (29) in einem Endteil (48a) des Schaftes (48) vorgesehen ist.

4. Dachluke nach Anspruch 3, wobei der erste Handgriff (29) an der zweiten Seite (4a) des Rahmens (2) so befestigt ist, dass er von dem durch den Rahmen (2) definierten Rahmenwerk nach außen vorsteht.

5. Dachluke nach einem der Ansprüche 1 bis 4, wobei der mindestens eine Handgriff (29, 30) einen zweiten Handgriff (30) aufweist, der einen oberen Teil (54) mit mindestens zwei Ansätzen (55) quer zu der zweiten Seite (4a) aufweist, und wobei zwei Verbindungslöcher (56) jeweils an einem jeweiligen Ansatz (55) vorgesehen sind.

6. Dachluke nach Anspruch 5, wobei der zweite Handgriff (30) einen unteren Teil (52) aufweist, der an der zweiten Seite (4a) befestigt ist, um sich um einen Scharnierachse (30a) parallel zur zweiten Seite (4a) selbst zu drehen; wobei der obere Teil (54) entlang einer Bogentrajektorie bewegbar ist, und zwar auf Grund der Einwirkung der Drehung des zweiten Handgriffes (30) um die Scharnierachse (30a).

7. Dachluke nach den Ansprüchen 3 und 5, wobei das Verbindungsloch (50) des ersten Handgriffes (29) zwischen den Verbindungslöchern (56) des zweiten Handgriffes (30) angeordnet ist, wenn der erste Handgriff (29) und der zweite Handgriff (30) beide in der Ruheposition sind.

8. Dachluke nach den Ansprüchen 5 und 7 , wobei der zweite Handgriff (30) einen Sitz (30b) vorsieht, der in dem oberen Teil (54) zwischen den zwei Ansätzen (55) vorgesehen ist und geeignet ist, um mit dem Endteil (48a) des Schaftes (48) des ersten Handgriffs (29) derart in Eingriff zu kommen, dass der erste Handgriff (29) mittig an dem zweiten Handgriff (30) ruht, wenn der erste Handgriff (29) und der zweite Handgriff (30) beide in der Ruheposition sind.

9. Dachluke nach einem der Ansprüche 5 bis 8, wobei der zweite Handgriff (30) an der zweiten Seite (4a) des Rahmens (2) so befestigt ist, dass er von dem Rahmenwerk, welches durch den Rahmen (2) definiert wird, nach innen vorsteht.

## Revendications

1. Trappe de toit pour véhicules, la trappe de toit (1) comprenant un cadre (2), qui comporte deux premiers côtés (5) parallèles l'un à l'autre et un second côté (4a) agencé entre une partie d'extrémité (5e) d'un desdits premiers côtés (5) et une partie d'extrémité (5e) de l'autre desdits premiers côtés (5), un couvercle (3) pour fermer l'ouverture définie par le cadre (2), et un système d'ouverture et de fermeture de trappe (7) comprenant au moins deux supports (8), qui sont fixés sur le couvercle (3) et présentent des fentes respectives (15), au moins deux organes mobiles (11), chacun d'eux est monté mobile sur l'un respectif desdits premiers côtés (5), comprend un siège terminal (14) respectif présentant un trou de passage (44) et est couplé d'une manière mobile à un support (8) respectif au moyen d'un axe de couplage (16) respectif, qui vient en prise avec le siège terminal (14) et la fente (15) dudit support (8) ; la trappe de toit étant **caractérisée en ce que** ledit axe de couplage (16) est maintenu dans le siège terminal (14) au moyen d'une goupille fendue (17) respective et **en ce qu'**elle comprend un système de libération de couvercle rapide (27-30) comprenant un câble (27), qui est libre d'avancer le long d'un trajet (P) s'étendant entre lesdites deux parties d'extrémité (5e) des deux premiers côtés (5) le long de tout le second côté (4a) et a chacune de ses extrémités (27a) connectée à la goupille fendue (17) d'un organe mobile (11) respectif, et au moins une poignée (29, 30), qui est couplée au câble (27) et est montée sur le second côté (4a) de façon à être mobile transversalement par rapport au trajet (P) entre une position de repos, dans laquelle le câble (27) est complètement étendu dans le trajet (P), et une position de fonctionnement, dans laquelle une section qui n'est pas d'extrémité du câble est extraite du trajet (P) de façon à tirer les goupilles fendues (17) et les enlever des sièges terminaux (14) respectifs, libérant ainsi les axes de couplage (16) respectifs.

2. Trappe de toit selon la revendication 1, dans laquelle ladite au moins une poignée (29, 30) présente au moins un trou de couplage (50, 56), qui est traversé par ledit câble (27), est aligné avec ledit trajet (P) quand la poignée (29, 30) est dans ladite position de repos, et n'est pas aligné avec le trajet (P) quand la poignée (29, 30) est dans ladite position de fonctionnement.

3. Trappe de toit selon la revendication 2, dans laquelle ladite au moins une poignée (29, 30), comprend une première poignée (29), qui comprend une tige (48) montée de façon à coulisser à travers une ouverture de guidage (49) obtenue dans ledit second côté (4a) du cadre (2) ; ledit trou de couplage (50) de la première poignée (29) étant obtenu dans une partie d'extrémité (48a) de la tige (48).

4. Trappe de toit selon la revendication 3, dans laquelle ladite première poignée (29) est montée sur ledit second côté (4a) du cadre (2) de façon à faire saillie vers l'extérieur depuis la structure définie par le cadre (2).

5. Trappe de toit selon l'une quelconque des revendications 1 à 4, dans laquelle ladite au moins une poignée (29, 30) comprend une seconde poignée (30), qui comprend une partie supérieure (54) comportant au moins deux volets (55) transversaux au dit second côté (4a), et deux trous de couplage (56) obtenus, chacun, sur un volet (55) respectif.

6. Trappe de toit selon la revendication 5, dans laquelle ladite seconde poignée (30) comprend une partie inférieure (52), qui est montée sur ledit second côté (4a) de façon à tourner autour d'un axe d'articulation (30a) parallèle au second côté (4a) lui-même ; ladite partie supérieure (54) étant mobile le long d'une trajectoire en arc du fait de l'effet de la rotation de la seconde poignée (30) autour de l'axe d'articulation (30a).

7. Trappe de toit selon les revendications 3 et 5, dans laquelle le trou de couplage (50) de la première poignée (29) est agencé entre les trous de couplage (56) de la seconde poignée (30) quand la première poignée (29) et la seconde poignée (30) sont toutes les deux dans la position de repos.

8. Trappe de toit selon les revendications 5 et 7, dans laquelle la seconde poignée (30) présente un siège (30b), qui est obtenu dans ladite partie supérieure (54) entre les deux volets (55) et convient pour venir en prise avec ladite partie d'extrémité (48a) de la tige (48) de la première poignée (29) de telle manière que la première poignée (29) repose centralement contre la seconde poignée (30) quand la première poignée (29) et la seconde poignée (30) sont toutes les deux dans la position de repos.

9. Trappe de toit selon l'une quelconque des revendications 5 à 8, dans laquelle ladite seconde poignée (30) est montée sur ledit second côté (4a) du cadre (2) de façon à faire saillie vers l'intérieur depuis la structure définie par le cadre (2).
